# EUROPEAN PATENT APPLICATION

(11) **EP 4 241 910 A1**
(43) Date of publication of application: **13.09.2023**
(21) Application number: 23152534.6
(22) Date of filing: 19.01.2023
(51) Int. Cl.: B23D 57/00, B28D 1/08

(54) **APPARATUS AND METHOD FOR CUTTING ROCK BY WIRE SAW**

(30) Priority: 10.03.2022 KR 20220030093
(71) Applicant: Gyeongdo Corporation, Sangju-si, Gyeongsangbuk-do 37185 (KR)
(72) Inventor: CHO, Kwang Eu, 13540 Seongnam-si (KR); KIM, Jung Hyi, 05649 Seoul (KR); MOON, Joon Bai, 04588 Seoul (KR); LEE, Jeung Suk, 12797 Gwangju-si (KR); SHIN, Jong Hun, 37360 Bongyang-myeon, Uiseong-gun (KR)
(74) Representative: Michalski Hüttermann & Partner Patentanwälte mbB

(57) **Abstract**

In accordance with an exemplary embodiment, an apparatus (100) for cutting a rock having a free surface by a wire saw may include: a body (110); a power unit (120) disposed on the body; a wire saw (130) having one side inserted into the free surface of the rock and brought into contact with a cutting start portion of the rock and the other side connected to the power unit (120) to control driving thereof; and a guide unit (150) disposed on a cutting end portion of the rock having at least a portion to be cut and configured to guide movement of the wire saw (130) in a cutting expected direction formed along a virtual line connecting the cutting start portion and the cutting end portion to improve an efficiency of a rock cutting process.

## Description

### BACKGROUND

The present disclosure relates to an apparatus and a method for cutting a rock by a wire saw, and more particularly, to an apparatus and a method for cutting a rock by a wire saw, which are capable of improving an efficiency of a rock cutting process.

In general, tunnel excavation is performed by using explosive blasting. The explosive blasting generates noise and vibration to the surroundings. Thus, when excavating a tunnel in an urban area, an explosive blasting operation may not be properly performed because noise and vibration caused by the explosive blasting may cause civil complaints or affect stability of nearby facilities.

Typically, a technique of cutting and excavating a rock using a wire saw is used to reduce noise and vibration. Specifically, a central portion of a target surface to be excavated is partitioned into a rectangle, and entry holes are drilled along a circumference of the partitioned area. Free surfaces are formed by cutting each of four sides of the rectangle by passing the wire saw through between two adjacent entry holes. Thereafter, the rock cutting process is performed to crush the rock.

However, since the wire saw has a small thickness, the free surface also has a small thickness. Thus, since a space of the free surface is small, an efficiency of the rock cutting process is decreased.

### [Related art document]

### [Patent document]

(Patent document 1) KR 10-1853303 B

### SUMMARY

The present disclosure provides an apparatus and a method for cutting a rock by a wire saw, which are capable of increasing a free surface space formed to perform a rock cutting process.

The present disclosure also provides an apparatus and a method for cutting a rock by a wire saw, which are capable of improving an efficiency of a rock cutting process.

In accordance with an exemplary embodiment, an apparatus for cutting a rock having a free surface by a wire saw includes: a body; a power unit disposed on the body; a wire saw having one side inserted into the free surface of the rock and brought into contact with a cutting start portion of the rock and the other side connected to the power unit to control driving thereof; and a guide unit disposed on a cutting end portion of the rock having at least a portion to be cut and configured to guide movement of the wire saw in a cutting expected direction formed along a virtual line connecting the cutting start portion and the cutting end portion.

The body may be disposed on a top surface of the rock, and the guide unit may be spaced apart from the body in a longitudinal direction of the rock on the top surface of the rock.

Each of the cutting start portion and the cutting end portion may extend in a width direction of the rock, and the guide unit may include: a first guide machine disposed above one end of the cut end part; and a second guide machine spaced apart from the first guide machine in the width direction of the rock and disposed above the other end of the cutting end portion.

The first guide machine may include: a first seating member seated on the top surface of the rock; a first pulley configured to guide the wire saw between the power unit and the one end of the cutting end portion and be inclined upward based on the top surface of the rock; a second pulley configured to guide the wire saw between the power unit and the first pulley; and a first support member disposed on the first seating member and configured to rotatably support central portions of the first pulley and the second pulley.

The second guide machine may include: a second seating member seated on the top surface of the rock; a rotary pulley configured to guide the wire saw between the first guide machine and the other end of the cutting end portion and be inclined upward based on the top surface of the rock; and a second support member disposed on the second seating member and configured to rotatably support a central portion of the rotary pulley, and the first guide machine may include: a third pulley configured to guide the wire saw between the power unit and the rotary pulley and having a central portion rotatably supported by the first support member; and a fourth pulley configured to guide the wire saw between the power unit and the third pulley and having a central portion rotatably supported by the first support member.

The guide unit may further include an angle adjuster disposed on a lower portion of at least one of the first guide machine and the second guide machine and configured to adjust an angle of the cutting expected direction by adjusting an angle at which at least one of the first guide machine and the second guide machine is supported.

The power unit may include: a main pulley to which the wire saw is connected; a power generator configured to generate power for rotating the main pulley; and a position adjuster disposed on the body to pull the wire saw by moving the main pulley in the longitudinal direction of the rock.

The free surface may be provided in plurality, and the guide unit may further include a third guide machine inserted into the free surface at a position opposite to the cutting start portion and configured to press a portion of the wire saw, which passes therethrough, downward to change a vertical position of the cutting end portion.

The free surface may be provided in plurality, and the apparatus may further include a path guide unit inserted into another free surface connected to the free surface on which the cutting start portion is formed and extending in the cutting expected direction to form a path through which the wire saw is pulled.

The wire saw may have a thickness less than that of the wire saw forming the free surface of the rock.

In accordance with another exemplary embodiment, a method for cutting a rock by a wire saw includes: forming a plurality of free surfaces on a rock; inserting the wire saw into the free surface having a cutting start portion of the rock among the free surfaces and bringing the wire saw into contact with the cutting start portion; and cutting the rock by pulling the wire saw in a cutting expected direction formed along a virtual line connecting the cutting start portion and the cutting end portion of the rock.

The forming of the plurality of free surfaces on the rock may include: drilling a plurality of entry holes in the rock; and forming free surfaces by driving the wire saw between the entry holes.

The drilling of the plurality of entry holes may include forming entry holes in a shape of vertices of a rectangle, and the forming of the free surfaces by driving the wire saw may include forming three free surfaces on the rock along a portion of a circumference of the rectangle.

The bringing of the wire saw into contact with the cutting start portion may include: forming a groove in the cutting start portion; and inserting the wire saw into the groove.

The pulling of the wire saw may include pulling the wire saw moved in one direction or both directions by rotation of a main pulley to which the wire saw is connected.

The cutting of the rock may include pulling the wire saw by moving the main pulley in a longitudinal direction of the rock or pulling the wire saw by reducing a length of the wire saw.

The method may further include, after the bringing of the wire saw into contact with the cutting start portion, adjusting a vertical position of the cutting end portion so that the free surface on which the cutting start portion is formed is arranged perpendicularly to the wire saw.

The method may further include, after the cutting of the rock, removing a cut portion of the rock to expand a free surface space.

### BRIEF DESCRIPTION OF THE DRAWINGS

Exemplary embodiments can be understood in more detail from the following description taken in conjunction with the accompanying drawings, in which:
FIG. 1 is a view illustrating an apparatus for cutting a rock by a wire saw in accordance with an exemplary embodiment;
FIG. 2 is a view illustrating a structure of a guide unit in accordance with an exemplary embodiment;
FIG. 3 is a view illustrating an operation structure of an angle adjustment member in accordance with an exemplary embodiment;
FIG. 4 is a view illustrating an operation structure of a third guide machine in accordance with an exemplary embodiment;
FIG. 5 is a view illustrating a structure of a path guide unit in accordance with an exemplary embodiment;
FIG. 6 is a flow chart showing a method for cutting a rock with a wire saw in accordance with an exemplary embodiment;
FIG. 7 is a view illustrating a wire saw rock cutting process in accordance with an exemplary embodiment; and
FIG. 8 is a view illustrating a wire saw rock cutting process in accordance with another exemplary embodiment.

### DETAILED DESCRIPTION OF EMBODIMENTS

Hereinafter, specific embodiments will be described in detail with reference to the accompanying drawings. The present disclosure may, however, be embodied in many different forms and should not be construed as being limited to the embodiments set forth herein; rather, these embodiments are provided so that this disclosure will be thorough and complete, and will fully convey the concept of the invention to those skilled in the art. In the figures, the dimensions of layers and regions are exaggerated for clarity of illustration, and like reference numerals refer to like elements throughout.

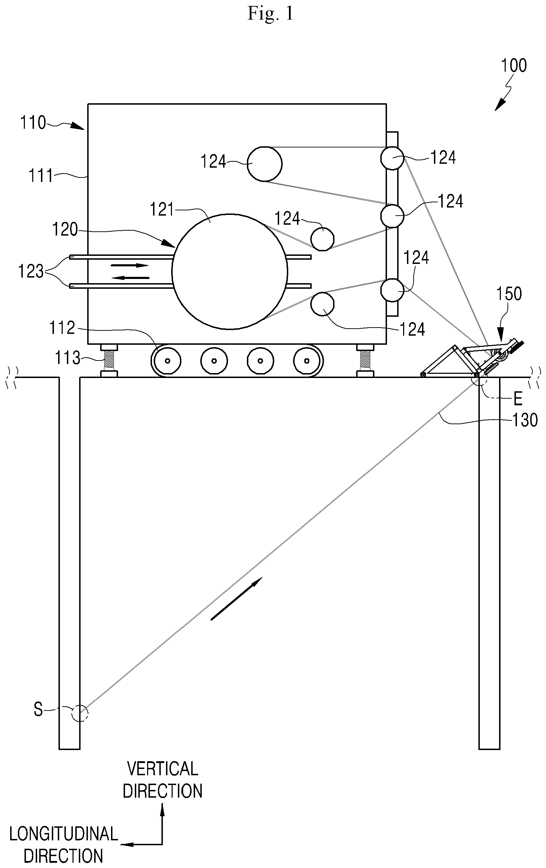

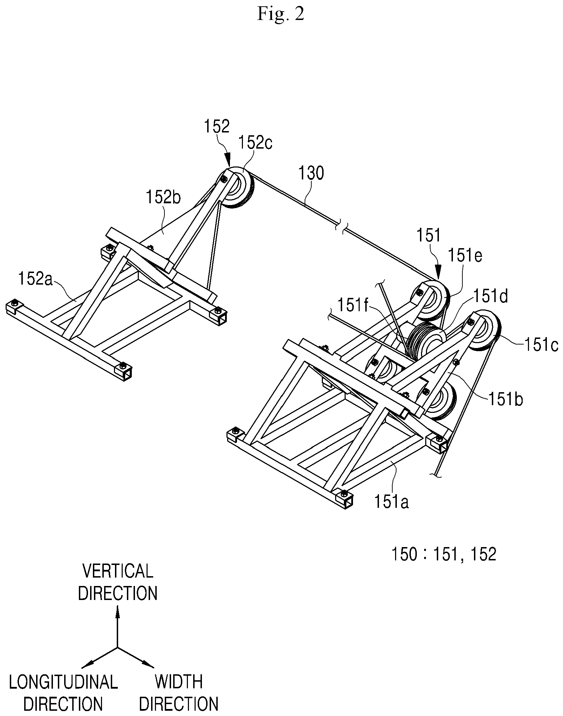

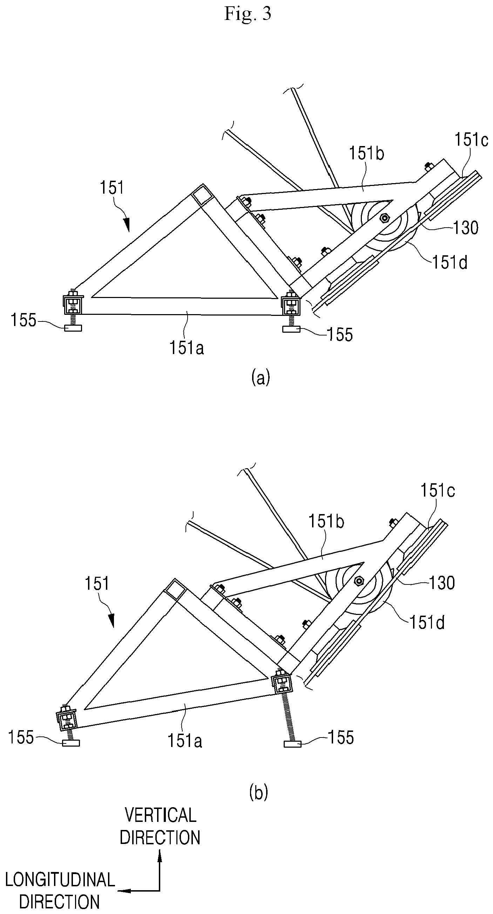

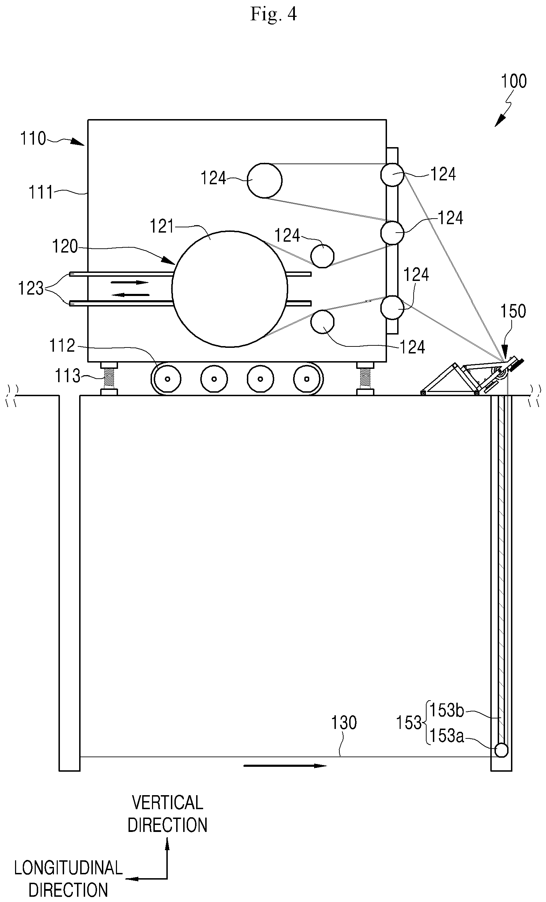

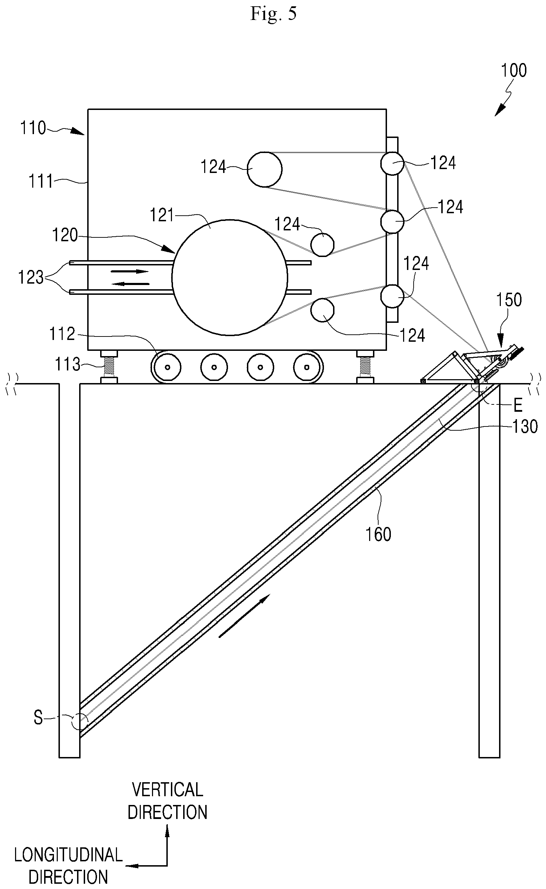

FIG. 1 is a view illustrating an apparatus for cutting a rock by a wire saw (hereinafter, referred to as a wire saw rock cutting apparatus) in accordance with an exemplary embodiment, FIG. 2 is a view illustrating a structure of a guide unit in accordance with an exemplary embodiment, FIG. 3 is a view illustrating an operation structure of an angle adjustment member in accordance with an exemplary embodiment, FIG. 4 is a view illustrating an operation structure of a third guide machine in accordance with an exemplary embodiment, and FIG. 5 is a view illustrating a structure of a path guide unit in accordance with an exemplary embodiment. Hereinafter, the wire saw rock cutting apparatus in accordance with an exemplary embodiment will be described.

The wire saw rock cutting apparatus in accordance with an exemplary embodiment cuts a rock having a free surface. Referring to FIG. 1, a wire saw rock cutting apparatus 100 includes a body 110, a wire saw 130, a power unit 120, and a guide unit 150.

Here, a rock will be described in order to understand the present invention. A plurality of free surfaces may be formed around a rock by using a wire saw to perform a rock cutting process. For example, four free surfaces may be formed on a circumference of side surfaces of a rock in a rectangular circumference shape and may extend in longitudinal and width directions. Also, a cutting start portion S of the rock for the wire saw 130 to start cutting may be formed on one of the free surfaces of the rock, and a cutting end portion E for the wire saw 130 to end the cutting may be formed on a free surface opposite to the free surface on which the cutting start portion S is formed. A position of the cutting start portion S may be determined by a depth at which the wire saw 130 is inserted into the free surface, and a position of the cutting end portion E may be determined by the guide unit 150. However, the exemplary embodiment is not limited to the number of free surfaces formed on the circumference of the rock and the shape of the rock. For example, the rock may have various free surfaces and various shapes.

The body 110 may be disposed on a top surface of the rock. The body 110 may include a main body 111, a moving wheel 112, and a fixture 113.

The main body 111 may have an appearance of a box shape. The main body 111 may support a power unit 120. However, the exemplary embodiment is not limited to the structure and shape of the main body 111. For example, the main body 111 may have various structures and shapes.

The moving wheel 112 may be disposed on a lower portion of the main body 111. The main body 111 may be moved on the top surface of the rock by the moving wheel 112. For example, the moving wheel 112 may be formed in the form of a track wheel, and may move the main body 111 in the longitudinal direction of the rock. Thus, the body 110 may be moved although the top surface of the rock is not flat. However, the exemplary embodiment is not limited to the shape of the moving wheel 112 and the direction in which the main body 111 is moved. For example, the moving wheel 112 may have various shapes, and the main body 111 may be moved in various directions.

The fixture 113 may be spaced apart from the moving wheel 112 and disposed at the lower portion of the main body 111. For example, the fixture 113 may be adjusted in length, and a plurality of fixtures 113 may be disposed on a lower portion of corners of the main body 111, respectively. Thus, when a vertical length of the fixture 113 is adjusted to be less than that of the moving wheel 112, the moving wheel 112 may contact the top surface of the rock to move the body 110, and when the vertical length of the fixture 113 is adjusted to be greater than that of the moving wheel 112, the body 110 may be fixed as the moving wheel 112 is spaced apart from the top surface of the rock, and the main body 111 is supported by the fixture 113. Thus, the body 110 may be moved to a desired position and then fixed before cutting the rock. However, the exemplary embodiment is not limited to the positions of the fixtures 113. For example, the fixtures 113 may be disposed at various positions.

The wire saw 130 may have one side contacting the cutting start portion S of the rock, in which the wire saw 130 is inserted into the free surface of the rock to cut the rock, and the other side connected to the power unit 120 to control driving of the wire saw 130. Also, the wire saw 130 may have a thickness less than that of the wire saw forming the free surface of the rock. For example, when the thickness of the wire saw forming the free surface of the rock is 11 mm, the thickness of the wire saw 130 contacting the cutting start portion S to cut the rock may be 9 mm. Thus, the wire saw 130 may be easily inserted into the free surface. However, the exemplary embodiment is not limited to the thickness of the wire saw 130. For example, the wire saw 130 may have various thicknesses.

The power unit 120 may be disposed on the body 110. The power unit 120 may control the driving of the wire saw 130. That is, the wire saw 130 may rub the rock by moving the wire saw 130 in one direction or both directions. The power unit 120 includes a main pulley 121, a power generator (not shown), and a position controller 123.

The main pulley 121 may be rotatably supported in one direction or both directions. For example, the main pulley 121 may have a circular plate shape to be rotated in a vertical direction and include a rotation shaft in a central portion thereof and a groove defined at a circumference thereof. The wire saw 130 may be positioned in the groove defined in the main pulley 121 and connected thereto to prevent from being separated. Thus, the driving may be controlled while the wire saw 130 is moved in one direction or both directions by rotation of the main pulley 121. However, the exemplary embodiment is not limited to the structure and shape of the main pulley 121. The main pulley 121 may have various structures and shapes.

The power generator may generate power that rotates the main pulley 121. For example, the power generator may be a motor, and the power generator may be connected to the rotation shaft of the main pulley 121 to rotate the main pulley 121. However, the exemplary embodiment is not limited to the method for rotating the main pulley 121. For example, the method for rotating the main pulley 121 may be variously provided.

The position controller 123 may be disposed on and supported by the main body 111 of the body 110. The position controller 123 may move the main pulley 121 in the longitudinal direction of the rock. For example, the position controller 123 may include a rail extending in the longitudinal direction of the rock and disposed on the main body 111 and a movable body disposed on the rail to be movable in the longitudinal direction of the rock and supporting the power generator. Thus, the wire saw 130 may be pulled or released while the power generator and the main pulley 121 are moved in the longitudinal direction of the rock by movement of the movable body. Accordingly, when cutting the rock, the wire saw 130 may be pulled by moving the main pulley 121 with the position controller 123 in a state in which the wire saw 130 is moved by rotating the main pulley 121. However, the exemplary embodiment is not limited to the method for pulling the wire saw 130. For example, the method for pulling the wire saw 130 may be variously provided.

Also, the power unit 120 may further include an auxiliary pulley 124. The auxiliary pulley 124 may be provided in plurality and disposed on the main body 111 of the body 110. The auxiliary pulleys 124 may guide the wire saw 130 between the guide unit 150 and the main pulley 121. For example, each of the auxiliary pulleys 124 may have a circular plate shape to be rotated in the vertical direction and include a rotation shaft in a central portion thereof and a groove defined at a circumference thereof. The wire saw 130 may be positioned in the groove defined in the auxiliary pulley 124 and connected thereto to prevent from being separated. Also, the auxiliary pulleys 124 may adjust tension of the wire saw 130. However, the exemplary embodiment is not limited to the structure and shape of the auxiliary pulley 124. For example, the auxiliary pulley 124 may have various structures and shapes.

As illustrated in FIGS. 1 and 2, the guide unit 150 may be spaced apart from the body 110 in the longitudinal direction of the rock on the top surface of the rock. At least a portion of the guide unit 150 may be disposed on the cutting end portion E of the rock, and the guide unit 150 may guide movement of the wire saw 130 in a cutting expected direction formed along a virtual line connecting the cutting start portion S and the cutting end portion E. Thus, the wire saw 130 may be pulled along the cutting expected direction by the guide unit 150 to cut the rock. For example, when the cutting start portion S is disposed at a lower portion of the rock, and the cutting end portion E is disposed at an upper portion of the rock, the cutting expected direction may extend in a diagonal line based on the top surface of the rock. The guide unit 150 includes a first guide machine 151 and a second guide machine 152.

The first guide machine 151 may face the power unit 120 in the longitudinal direction of the rock. Thus, the wire saw 130 may extend from the power unit 120 to the cutting start portion S through the first guide machine 151. For example, when each of the cutting start portion S and the cutting end portion E extends in the width direction of the rock, the first guide machine 151 may be disposed above one end of the cutting end portion E. Thus, the first guide machine 151 may be disposed opposite to one end of the cutting start portion S and guide the movement of the wire saw 130 in the cutting expected direction between the power unit 120 and the one end of the cutting start portion S. The first guide machine 151 includes a first seating member 151a, a first pulley 151c, a second pulley 151d, and a first support member 151b.

The first seating member 151a may be seated on the top surface of the rock. For example, the first seating member 151a may have a triangular frame shape. However, the exemplary embodiment is not limited to the structure and shape of the first seating member 151a. For example, the first seating member 151a may have various structures and shapes.

The first pulley 151c may guide the wire saw 130 between the power unit 120 and one end of the cutting end portion E. For example, the first pulley 151c may have a circular plate shape to be rotated in a horizontal direction and include a rotation shaft in a central portion thereof and a groove defined at a circumference thereof. The wire saw 130 may be positioned in the groove defined in the first pulley 151c and connected thereto to prevent from being separated. Also, the first pulley 151c may be inclined upward based on the top surface of the rock. Thus, the wire saw 130 may extend from the one end of the cutting end portion E to the one end of the cutting start portion S through the first pulley 151c. However, the exemplary embodiment is not limited to the structure and shape of the first pulley 151c. For example, the first pulley 151c may have various structures and shapes.

The second pulley 151d may be disposed to guide the wire saw 130 between the power unit 120 and the first pulley 151c. For example, the second pulley 151d may have a circular plate shape to be rotated in the vertical direction and include a rotation shaft in a central portion thereof and a groove defined at a circumference thereof. The wire saw 130 may be positioned in the groove defined in the second pulley 151d and connected thereto to prevent from being separated. Thus, the wire saw 130 may extend from the first pulley 151c to the power unit 120 through the second pulley 151d. However, the exemplary embodiment is not limited to the structure and shape of the second pulley 151d. For example, the second pulley 151d may have various structures and shapes.

The first support member 151b may be disposed on the first seating member 151a. For example, the first support member 151b may have an inverted triangular frame shape and connected to the first support member 151b in order to support the first pulley 151c to be inclined. The first support member 151b may support the first pulley 151c and the second pulley 151d to be spaced apart from each other in the longitudinal direction of the rock, and central portions of the first pulley 151c and the second pulley 151d may be rotatably connected to the first support member 151b. However, the exemplary embodiment is not limited to the structure and shape of the first support member 151b. For example, the first support member 151b may have various structures and shapes.

The second guide machine 152 may be spaced apart from the first guide machine 151. For example, when each of the cutting start portion S and the cutting end portion E extends in the width direction of the rock, the second guide machine 152 may be spaced apart from the first guide machine 151 in the width direction of the rock and disposed above the other end of the cutting end portion E. That is, the first guide machine 151 and the second guide machine 152 may be spaced apart from each other according to a width directional length of the rock. Thus, the wire saw 130 may be disposed to surround the circumference of the rock according to the width directional length of the rock. Also, the second guide machine 152 may be disposed opposite to the other end of the cutting start portion S and guide the movement of the wire saw 130 in the cutting expected direction. The second guide machine 152 includes a second seating member 152a, a rotary pulley 152c, and a second support member 152b.

The second seating member 152a may be seated on the top surface of the rock. For example, the second seating member 152a may have a triangular frame shape. However, the exemplary embodiment is not limited to the structure and shape of the second seating member 152a. For example, the second seating member 152a may have various structures and shapes.

The rotary pulley 152c may guide the wire saw 130 between the first guide machine 151 and the other end of the cutting end portion E. For example, the rotary pulley 152 may have a circular plate shape to be rotated in the horizontal direction and include a rotation shaft in a central portion thereof and a groove defined at a circumference thereof. The wire saw 130 may be positioned in the groove defined in the rotary pulley 152c and connected thereto to prevent from being separated. Also, the rotary pulley 152c may be inclined upward based on the top surface of the rock. Thus, the wire saw 130 may extend from the other end of the cutting end portion E to the first guide machine 151 through the rotary pulley 152c. However, the exemplary embodiment is not limited to the structure and shape of the rotary pulley 152c. For example, the rotary pulley 152c may have various structures and shapes.

The second support member 152b may be disposed on the second seating member 152a. The second support member 152b may support the rotary pulley 152 to be inclined. The central portion of the rotary pulley 152c may be rotatably supported by the second support member 152b. However, the exemplary embodiment is not limited to the structure and shape of the second support member 152b. For example, the second support member 152b may have various structures and shapes.

When the second guide machine 152 guides the wire saw 130 between the other end of the cutting end portion E and the first guide machine 151, the first guide machine 151 may further include a third pulley 151e and a fourth pulley 151f. Thus, the wire saw 130 guided between the second guide machine 152 and the first guide machine 151 may be guided even between the first guide machine 151 and the power unit by the third pulley 151e and the fourth pulley 151f. Thus, portions of the wire saw 130, which extend from one end and the other end of the cutting end portion E and connected with the guide unit 150, may be guided by one main pulley 121 instead of being connected to separate main pulleys.

The third pulley 151e may guide the wire saw 130 between the second guide machine 152 and the power unit 120. The third pulley 151e may be spaced apart from the first pulley 151c in the horizontal direction and supported by the first support member 151b.. For example, the third pulley 1513 may have a circular plate shape to be rotated in the horizontal direction and include a rotation shaft in a central portion thereof and a groove defined at a circumference thereof. The wire saw 130 may be positioned in the groove defined in the third pulley 151e and connected thereto to prevent from being separated. Also, the third pulley 151e may be inclined upward based on the top surface of the rock. Thus, the third pulley 151e may be disposed on the same line as the rotary pulley 152c in the width direction of the rock, and the wire saw 130 may pass through the third pulley 151e between the rotary pulley 152c and the fourth pulley 151f. However, the exemplary embodiment is not limited to the structure and shape of the third pulley 151e. For example, the third pulley 151e may have various structures and shapes.

The fourth pulley 151f may guide the wire saw 130 between the power unit 120 and the third pulley 151e. The fourth pulley 151f may be spaced apart from the second pulley 151d in the horizontal direction and supported by the first support member 151b.. For example, the fourth pulley 151f may have a circular plate shape to be rotated in the vertical direction and include a rotation shaft in a central portion thereof and a groove defined at a circumference thereof. The wire saw 130 may be positioned in the groove defined in the fourth pulley 151f and connected thereto to prevent from being separated. Thus, the wire saw 130 may extend from the third pulley 151e to the power unit 120 through the fourth pulley 151f. However, the exemplary embodiment is not limited to the structure and shape of the fourth pulley 151f. For example, the fourth pulley 151f may have various structures and shapes.

As illustrated in FIG. 3, the guide unit 150 may further include an angle adjuster 155. The angle adjuster 155 may be disposed on a lower portion of at least one of the first guide machine 151 and the second guide machine 152. For example, the angle adjuster 155 may be adjusted in length and disposed on a lower portion of one side or both sides of the first guide machine 151 or the second guide machine 152. Thus, when both heights of the first guide machine 151 or the second guide machine 152 by differently adjusting the length of the angle adjuster 155, an angle at which the wire saw 130 is guided may be adjusted. Thus, an angle of the cutting expected direction may be adjusted according to the positions of the cutting start portion S and the cutting end portion E of the rock by using the angle adjuster 155. However, the exemplary embodiment is not limited to the structure and shape of the angle adjuster 155. For example, the angle adjuster 155 may have various structures and shapes.

As illustrated in FIG. 4, the guide unit 150 may further include a third guide machine 153. The third guide machine 153 may be inserted into the free surface at a position opposite to the cutting start portion S. Thus, the third guide machine 153 may press a portion of the wire saw, which passes therethrough, downward to change a vertical position of the cut end part E. The third guide machine 153 may include a pressing pulley 153a and a support frame 153b.

The pressing pulley 153a may contact the wire saw 130 and press the wire saw 130 downward. Thus, while the portion of the wire saw 130 in contact with the pressure pulley 153a moves downward, the position of the cut end portion E can be changed as much as the wire saw 130 moves downward. Thus, the rock may be cut by setting the cutting start portion S and the cutting end portion E to be positioned on a linear line in the longitudinal direction. Also, the wire saw 130 may be guided between the cutting start portion S and the first guide machine 151 and between the cutting start portion S and the second guide machine 152 through the pressing pulley 153a. For example, the pressing pulley 153a may have a circular plate shape to be rotated in the vertical direction and include a rotation shaft in a central portion thereof and have a groove defined at a circumference thereof. The wire saw 130 may be positioned in the groove defined in the pressing pulley 153a and connected thereto to prevent from being separated. However, the exemplary embodiment is not limited to the structure and shape of the pressing pulley 153a. For example, the pressing pulley 153a may have various structures and shapes.

The support frame 153b may be a bar extending in the vertical direction. The support frame 153b may have an upper portion connected to and supported by the first guide machine 151 or the second guide machine 152 and a lower portion that rotatably supports the central portion of the pressing pulley 153a. The support frame 153b may press the wire saw 130 downward as much as a vertical length of the pressing pulley 153a.

As illustrated in FIG. 5, the wire saw rock cutting apparatus 100 may further include a path guide unit 160. The path guide unit 160 may be inserted into another free surface connected to the free surface on which the cutting start portion S is formed. The path guide unit 160 may extend in the cutting expected direction in an inserted state to form a path through which the wire saw 130 is pulled. To this end, the path guide unit 160 may have a thickness less than that of the wire saw forming the free surface. The path guide unit 160 may have a pipe shape. A portion contacting the side surface of the rock in the path guide unit 160 may be opened. Since the wire saw 130 is pulled along an extended direction of the path guide unit 160, the wire saw 130 may be further stably pulled along the cutting expected direction. Thus, the rock may be cut more precisely. However, the exemplary embodiment is not limited to the structure and shape of the path guide unit 160. For example, the path guide unit 160 may have various structures and shapes.

As described above, a free surface space formed to perform the rock cutting process may be increased by cutting the rock having the free surface around the circumference with the wire saw 130. Thus, an efficiency of the rock cutting process may be improved by the increased free surface space.

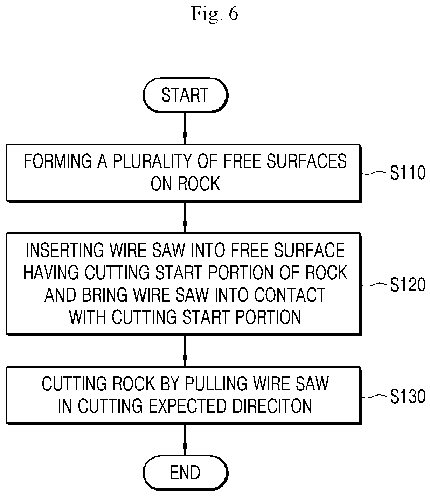

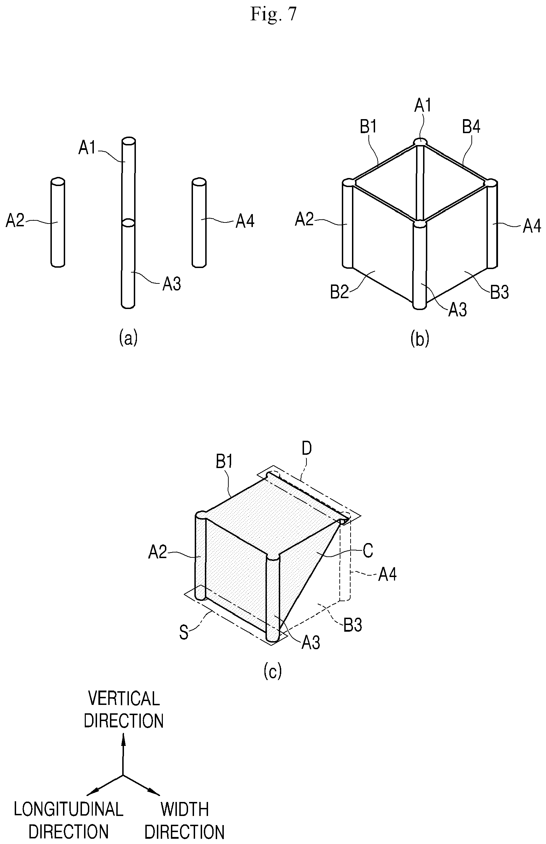

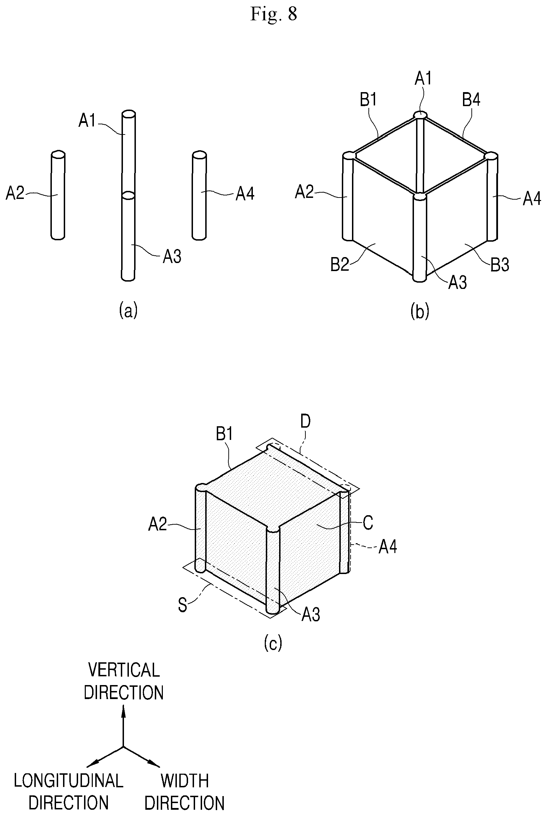

FIG. 6 is a flow chart showing a method for cutting a rock with a wire saw (hereinafter, referred to as a wire saw rock cutting method) in accordance with an exemplary embodiment, FIG. 7 is a view illustrating a wire saw rock cutting process in accordance with an exemplary embodiment, and FIG. 8 is a view illustrating a wire saw rock cutting process in accordance with another exemplary embodiment. Hereinafter, the wire saw rock cutting method in accordance with an exemplary embodiment will be described.

The wire saw rock cutting method in accordance with an exemplary embodiment forms a free surface on a rock and increase a free surface space to perform a rock cutting process. Referring to FIG. 6, the wire saw rock cutting method includes: a process S110 of forming a plurality of free surfaces on the rock, a process S120 of inserting a wire saw into the free surface having a cutting start portion of the rock among the free surfaces and allowing the wire saw to contact the cutting start portion; and a process S130 of cutting the rock by pulling the wire saw in a cutting expected direction formed along a virtual line connecting the cutting start portion and a cutting end portion of the rock.

Here, the process of allowing the wire saw to contact the cutting start portion and the process of cutting the rock by pulling the wire saw in the cutting expected direction may be performed by the wire saw rock cutting apparatus 100 in accordance with an exemplary embodiment in FIGS. 1 to 5. However, the exemplary embodiment is not limited thereto. For example, various wire saw rock cutting apparatuses having different structures may be used.

First, a plurality of free surfaces are formed on the rock in the process S110. To this end, a plurality of entry holes may be drilled in the rock. For example, the entry holes may be formed in a shape of vertices of a rectangle on the rock by using a drilling device. That is, as illustrated in (a) of FIG. 7, each of a first entry hole A1, a second entry hole A2, a third entry hole A3, and a fourth entry hole A4, each of which extends in the vertical direction, may be formed while moving the drilling device to a position at which the entry hole is to be formed. However, the exemplary embodiment is not limited to the number and shape of the entry holes. For example, the number and shapes of entry holes may be variously provided.

Also, a plurality of free surfaces may be formed by driving the wire saw between the entry holes. In detail, the plurality of free surfaces may be formed on the rock by using the wire saw apparatus capable of moving the wire saw in the vertical direction.

For example, four free surfaces may be formed on the rock along a rectangular circumference shape. That is, as illustrated in (b) of FIG. 7, a first free surface B1 may be formed by moving the wire saw between the first entry hole A1 and the second entry hole A2, a second free surface B2 may be formed by moving the wire saw between the second entry hole A2 and the third entry hole A3, a third free surface B3 may be formed by moving the wire saw between the third entry hole A3 and the fourth entry hole A4, and a fourth free surface B4 may be formed by moving the wire saw between the fourth entry hole A4 and the first entry hole A1.

Alternatively, three free surfaces may be formed on the rock along a portion of the rectangular circumference shape. That is, the first free surface B1 may be formed by moving the wire saw between the first entry hole A1 and the second entry hole A2, the second free surface B2 may be formed by moving the wire saw between the second entry hole A2 and the third entry hole A3, and the third free surface B3 may be formed by moving the wire saw between the third entry hole A3 and the fourth entry hole A4.

Thereafter, the wire saw is inserted into the free surface having the cutting start portion of the rock among the free surfaces, and the wire saw is brought into contact with the cutting start portion in the process S120. That is, the wire saw 130 may be inserted into a space of the free surface having the cutting start portion S and moved downward, and driving of the wire saw 130 is controlled to form a groove in the cutting start portion S. For example, tension of the wire saw 130 may be adjusted in a state in which the wire saw 130 is brought into contact with the cutting start portion S to closely contact the cutting start portion S, and then the wire saw 130 may be moved in one direction or both directions to form the groove. Thereafter, the wire saw 130 may be inserted into the groove defined in the cutting start portion S. Thus, when pulling the wire saw 130 is pulled in the cutting expected direction, the wire saw 130 may be suppressed or prevented from being separated.

Thereafter, the rock is cut by pulling the wire saw in the cutting expected direction formed along a virtual line connecting the cutting start portion and the cutting end portion of the rock in the process S130. For example, when the cutting start portion S is disposed at a lower portion of the rock, and the cutting end portion E is disposed at an upper portion of the rock, the cutting expected direction may extend in a diagonal line based on a top surface of the rock. The wire saw 130 may be pulled by moving a main pulley 121 in a longitudinal direction of the rock or by reducing a length of the wire saw 130 using a separate device for winding the wire saw 130. Since a guide unit 150 guides movement of the wire saw 130 in the cutting expected direction, the wire saw 130 may cut the rock while moving in the cutting expected direction when pulled.

Here, the wire saw 130 may be in a state of being moved in one direction or both directions by rotation of the main pulley 121 connected thereto. Thus, the pulled wire saw 130 may be moved in a pulled direction while rubbing the rock. Thus, the rock may be easily cut and separated into a triangular pyramid shape by the wire saw 130 pulled from the cutting start portion S to the cutting end portion E.

After the rock is cut, a cut portion C may be removed as illustrated in (c) of FIG. 7. That is, the cut portion C of the rock may be crushed or transferred to the outside. Thus, the free surface space may be expanded as much as a volume of the removed portion of the rock. Thereafter, the rock cutting process may be performed by using the expanded free surface space.

When four free surfaces are formed in a rectangular shape on the rock as illustrated in FIG. 8, the wire saw 130 may be brought into contact with the cutting start portion S, and then a vertical position of the cutting end portion E may be adjusted. That is, the wire saw 130 may be arranged perpendicularly to the free surface on which the cutting start portion S is formed by pressing the wire saw 130 downward. Thus, when the wire saw 130 is pulled in the vertical direction, a lower portion of the rock may be cut and separated in a rectangular parallelepiped shape to be removed as illustrated in (c) of FIG. 8. Thus, the free surface space may be further increased as a volume of the separated portion is increased more than a case when the rock is cut and separated in the triangular pyramid shape.

As described above, the free surface space formed to perform the rock cutting process may be increased by cutting the rock having the free surface around the circumference with the wire saw 130. Thus, an efficiency of the rock cutting process may be improved by the increased free surface space.

In accordance with the exemplary embodiments, the free surface space formed to perform the rock cutting process by using the wire saw may be increased. Thus, the efficiency of the rock cutting process may be improved by the increased free surface space.

Although a preferred embodiment of the present invention has been described in the detailed description of embodiments, various changes and modifications may be made thereto without departing from the scope and spirit of the present invention defined by the appended claims. Therefore, the scope of the invention is defined not by the detailed description of the invention but by the appended claims, and all differences within the scope will be construed as being included in the present invention.

## Claims

1. An apparatus for cutting a rock having a free surface by a wire saw, comprising:
a body;
a power unit disposed on the body;
a wire saw having one side inserted into the free surface of the rock and brought into contact with a cutting start portion of the rock and the other side connected to the power unit to control driving thereof; and
a guide unit disposed on a cutting end portion of the rock having at least a portion to be cut and configured to guide movement of the wire saw in a cutting expected direction formed along a virtual line connecting the cutting start portion and the cutting end portion.

2. The apparatus of claim 1, wherein the body is disposed on a top surface of the rock, and
the guide unit is spaced apart from the body in a longitudinal direction of the rock on the top surface of the rock.

3. The apparatus of claim 1 or 2, wherein each of the cutting start portion and the cutting end portion extends in a width direction of the rock, and
the guide unit comprises:
a first guide machine disposed above one end of the cut end part; and
a second guide machine spaced apart from the first guide machine in the width direction of the rock and disposed above the other end of the cutting end portion.

4. The apparatus of any of the claims 1 to 3, wherein the first guide machine comprises:
a first seating member seated on the top surface of the rock;
a first pulley configured to guide the wire saw between the power unit and the one end of the cutting end portion and be inclined upward based on the top surface of the rock;
a second pulley configured to guide the wire saw between the power unit and the first pulley; and
a first support member disposed on the first seating member and configured to rotatably support central portions of the first pulley and the second pulley.

5. The apparatus of any of the claims 1 to 4, wherein the second guide machine comprises:
a second seating member seated on the top surface of the rock;
a rotary pulley configured to guide the wire saw between the first guide machine and the other end of the cutting end portion and be inclined upward based on the top surface of the rock; and
a second support member disposed on the second seating member and configured to rotatably support a central portion of the rotary pulley,
wherein the first guide machine comprises:
a third pulley configured to guide the wire saw between the power unit and the rotary pulley and having a central portion rotatably supported by the first support member; and
a fourth pulley configured to guide the wire saw between the power unit and the third pulley and having a central portion rotatably supported by the first support member.

6. The apparatus of any of the claims 1 to 5, wherein the guide unit further comprises an angle adjuster disposed on a lower portion of at least one of the first guide machine and the second guide machine and configured to adjust an angle of the cutting expected direction by adjusting an angle at which at least one of the first guide machine and the second guide machine is supported.

7. The apparatus of any of the claims 1 to 6, wherein the power unit comprises:
a main pulley to which the wire saw is connected;
a power generator configured to generate power for rotating the main pulley; and
a position adjuster disposed on the body to pull the wire saw by moving the main pulley in the longitudinal direction of the rock.

8. The apparatus of any of the claims 1 to 7, wherein the free surface is provided in plurality, and
the guide unit further comprises a third guide machine inserted into the free surface at a position opposite to the cutting start portion and configured to press a portion of the wire saw, which passes therethrough, downward to change a vertical position of the cutting end portion.

9. The apparatus of any of the claims 1 to 8, wherein the free surface is provided in plurality, and
the apparatus further comprises a path guide unit inserted into another free surface connected to the free surface on which the cutting start portion is formed and extending in the cutting expected direction to form a path through which the wire saw is pulled.

10. A method for cutting a rock by a wire saw, comprising:
forming a plurality of free surfaces on a rock;
inserting the wire saw into the free surface having a cutting start portion of the rock among the free surfaces and bringing the wire saw into contact with the cutting start portion; and
cutting the rock by pulling the wire saw in a cutting expected direction formed along a virtual line connecting the cutting start portion and the cutting end portion of the rock.

11. The method of claim 10, wherein the forming of the plurality of free surfaces on the rock comprises:
drilling a plurality of entry holes in the rock; and
forming free surfaces by driving the wire saw between the entry holes.

12. The method of claim 10 or 11, wherein the drilling of the plurality of entry holes comprises forming entry holes in a shape of vertices of a rectangle, and
the forming of the free surfaces by driving the wire saw comprises forming three free surfaces on the rock along a portion of a circumference of the rectangle.

13. The method of any of the claims 10 to 12 wherein the bringing of the wire saw into contact with the cutting start portion comprises:
forming a groove in the cutting start portion; and
inserting the wire saw into the groove.

14. The method of any of the claims 10 to 13, wherein the pulling of the wire saw comprises pulling the wire saw moved in one direction or both directions by rotation of a main pulley to which the wire saw is connected.

15. The method of any one of claims any of the claims 10 to 14, further comprising, after the cutting of the rock, removing a cut portion of the rock to expand a free surface space.
